# EUROPÄISCHE PATENTSCHRIFT

(11) **EP 3 752 961 B1**
(45) Veröffentlichungstag und Bekanntmachung des Hinweises auf die Patenterteilung: **22.06.2022**
(21) Anmeldenummer: 19701952.4
(22) Anmeldetag: 15.01.2019
(51) Int. Cl.: G06K 19/067

(54) **VERFAHREN ZUM DRAHTLOSEN AUSLESEN UNTERSCHIEDLICHER IDENTIFIKATIONSELEMENTE**
METHOD FOR WIRELESS READING OF IDENTIFACTION ELEMENTS
PROCÉDÉ DE LECTURE SANS FIL POUR ELEMENTS D'IDENTIFICATION

(30) Priorität: 16.02.2018 AT 501492018
(43) Veröffentlichungstag der Anmeldung: 23.12.2020
(73) Patentinhaber: Sensideon GmbH, 4600 Wels (AT)
(72) Erfinder: FACHBERGER, René, 4600 Wels (AT)
(74) Vertreter: Hübscher & Partner Patentanwälte GmbH
(86) Internationale Anmeldenummer: PCT/AT2019/050004
(87) Internationale Veröffentlichungsnummer: WO 2019/157542

(56) Entgegenhaltungen:
- EP-B1- 1 035 419
- DE-T2- 60 312 877
- KR-A- 20170 053 162
- US-A- 4 734 698
- JOE DOWLING ET AL: "RFID-enabled temperature sensing devices: A major step forward for energy efficiency in home and industrial applications?", WIRELESS SENSING, LOCAL POSITIONING, AND RFID, 2009. IMWS 2009. IEEE MTT-S INTERNATIONAL MICROWAVE WORKSHOP ON, 1. September 2009 (2009-09-01), Seiten 1-4, XP055568543, Piscataway, NJ, USA DOI: 10.1109/IMWS2.2009.5307884 ISBN: 978-1-4244-5060-2

## Beschreibung

### Technisches Gebiet

Die Erfindung betrifft ein Verfahren zum drahtlosen Auslesen unterschiedlicher Identifikationselemente, wobei eine Ausleseeinheit ein eine Basissequenz und eine Identifikationssequenz enthaltendes Signal von einem Identifikationselement empfängt und aus der Basissequenz ein Raster zur Auswertung der Identifikationssequenz erzeugt wird.

### Stand der Technik

Die WO9742519A1 beschreibt ein Verfahren zum berührungslosen Auslesen eines Signals von einem Identifikationselement. Das Signal besteht dabei aus einer Identifikationssequenz zur eindeutigen Zuordnung und einer Basissequenz, die eine Aufschlüsselung der Identifikationssequenz in verschiedene Klassen ermöglicht, wodurch eine Erhöhung der Anzahl von potentiellen Identifikationselementen erzielt wird. Es ist bekannt, dass Störgrößen, wie beispielsweise Druck oder Temperatur, insbesondere die elektrischen Eigenschaften von Identifikationselementen nachteilig verändern. Dadurch wird unter anderem die Zeitbasis, welche ein Maß für die zeitliche Abfolge von Signalteilen der Identifikationssequenz und damit der darüber übermittelten Information darstellt, verändert, was zu fehlerhaften Auswertungen von Identifikationselementen führt. Um auf die Identifikationselemente einwirkende Störgrößen bei der Auswertung dieser Identifikationselemente berücksichtigen zu können, wird in der US2004075560A1 vorgeschlagen, eine Zeitbasissequenz in das Signal einzufügen. Auf Basis des tatsächlich gemessenen zeitlichen Abstandes kann dadurch ein Zeitraster abgeleitet werden, das zur Auswertung der Identifikationssequenz herangezogen wird. Nachteilig ist daran allerdings, dass bereits bei der Herstellung des Identifikationselements Produktionsfehler den zeitlichen Sollabstand der Impulse der Zeitbasissequenz verändern können, sodass die betroffenen Identifikationselemente nicht mehr zuverlässig ausgelesen werden können. Um dies zu vermeiden, müssen in der Praxis daher die Identifikationssequenzen so gewählt werden, dass trotz des Einflusses von Störgrößen eine Unterscheidung der Identifikationselemente möglich bleibt, was zu einer entsprechenden Limitierung der möglichen Anzahl solcher Identifikationselemente führt.

Das Vorsehen von Impulsen am Signalanfang ist darüber hinaus beispielsweise aus der EP 0 939 907 B1 bekannt.

### Darstellung der Erfindung

Der Erfindung liegt somit die Aufgabe zugrunde, ein Verfahren zu schaffen, das das Auslesen einer größeren Anzahl von Identifikationselementen ermöglicht, ohne dass trotz des Einflusses von Störgrößen Fehler beim Auslesen der Identifikationssequenz in Kauf genommen werden müssen.

Die Erfindung löst die gestellte Aufgabe dadurch, dass die Basissequenz eine von der Basis unabhängige Klasseninformation beinhaltet, auf Grund derer das Raster zur Auswertung der Identifikationssequenz angepasst wird.

Zufolge dieser Maßnahmen ist es mit dem erfindungsgemäßen Verfahren nicht nur möglich, bei gleichbleibender Signallänge eine größere Anzahl an Identifikationselementen durch die Kombination der Identifikationssequenz mit der Klasseninformation zu adressieren, sondern auch an Hand der Klassenidentifikation vorab bekannte Störgrößen, wie beispielsweise Produktionsfehler, in der Auswertung der Identifikationssequenz zu berücksichtigen. Damit wird einerseits die Auslesegenauigkeit, und andererseits die Anzahl auslesbarer Identifikationselemente erhöht. Für die Berücksichtigung von vorab bekannten Störgrößen kann entweder die Klasseninformation bereits bei der Produktion an bekannte Bauteilvarianzen angepasst werden, oder erst später nach Kalibrierung der Identifikationselemente ein der jeweiligen Klasseninformation zugeordneter Korrekturfaktor bestimmt und in der Ausleseeinheit hinterlegt werden. Die Klasseninformation kann zu diesem Zweck in unterschiedlicher Weise in die Basissequenz, die beispielsweise eine Zeitbasis- oder eine Frequenzbasissequenz sein kann, integriert werden. Besonders einfache Ausführungsbedingungen ergeben sich allerdings dann, wenn die Klasseninformation durch einen zwischen zwei die Basis festlegenden Impulsen liegenden dritten Impuls übertragen wird, wobei die Klasseninformation selbst das dimensionslose und damit von einer Impulsgröße unabhängige Verhältnis zwischen der Differenz zwischen dem ersten und dem dritten sowie dem dritten und dem zweiten Impuls bildet. Um die Klasseninformation zur Verbesserung der Auswertung der Identifikationssequenz des Signals heranzuziehen, kann beispielsweise der durch zwei Impulse festgelegte Raster, der die Position der einzelnen Signalteile der Identifikationssequenz festlegt, an Hand der Klasseninformation an vorab bekannte Störgrößen angepasst werden. Diese Anpassung kann sowohl eine lineare Streckung des Rasters, aber auch nichtlineare Verzerrungen umfassen. Bei Störungen, die nicht nur die Basis alleine betreffen, kann die Anpassung auch durch Multiplikation der Identifikationssequenz mit einer invertierten Störübertragungsfunktion im Frequenzbereich erfolgen, sofern die Störübertragungsfunktion oder ihre Inverse zur übermittelten Klasseninformation hinterlegt wurde. Es ist zudem generell möglich, die Basis- und Identifikationssequenzen nicht nur über eine Zeitkodierung, sondern beispielsweise auch über eine Frequenzkodierung zu bilden.

Um auch vorab unbekannte Störgrößen bei der Auswertung der Identifikationssequenz berücksichtigen zu können, wird vorgeschlagen, dass die zufolge einer Störgröße auftretende Abweichung der Basissequenz von einer der Klasseninformation zugeordneten Referenzbasissequenz bestimmt und das Raster zur Auswertung der Identifikationssequenz entsprechend dieser Abweichung, wie bereits oben beschrieben, angepasst wird.

Dadurch, dass zufolge obiger Ausführungen die Identifikationssequenz auch bei stärkeren Störungen ausgelesen werden kann, sofern wenigstens ein Teil dieser Störungen vorab bekannt ist, wird es möglich, dass die Identifikationselemente Sensoren für eine Messgröße bilden und die Messgröße von der Ausleseeinheit aus der Abweichung der Identifikationssequenz eines Identifikationselementes zu einer dem Identifikationselement zugeordneten Referenzidentifikationssequenz und/oder aus der Abweichung der Basissequenz eines Identifikationselementes zu einer, dem Identifikationselement zugeordneten Referenzbasissequenz bestimmt wird. Entscheidend ist dafür lediglich, dass die Abweichung der Identifikationssequenz eines Identifikationselements zu einer dem Identifikationselement zugeordneten Referenzidentifikationssequenz bzw. die Abweichung der Basissequenz eines Identifikationselements zu einer dem Identifikationselement zugeordneten Referenzbasissequenz so gering bleibt, dass eine eindeutige Identifikation des Identifikationselementes nach wie vor möglich bleibt. Ist dies der Fall, kann die Messgröße sogar eine vorab nicht bekannte Störgröße sein, wie beispielsweise die Temperatur oder mechanische Verformung des Identifikationselementes. Die Messgröße selbst kann dabei entweder direkt proportional zu der ermittelten Abweichung sein oder mit dieser über eine vorab zu bestimmende Kennlinie zusammenhängen und, sofern dieser Zusammenhang in der Ausleseeinheit hinterlegt ist, direkt aus der Abweichung der Identifikationssequenz zu der, dem Identifikationselement zugeordneten Referenzidentifikationssequenz bzw. aus der Abweichung der Basissequenz zu der, dem Identifikationselement zugeordneten Referenzbasissequenz ermittelt werden.

### Kurze Beschreibung der Erfindung

In der Zeichnung ist eine Ausführungsform des Erfindungsgegenstandes beispielsweise dargestellt. Es zeigen
- Fig. 1: den Zeitverlauf eines einzelnen Signals eines Identifikationselements und
- Fig. 2: eine Gegenüberstellung von Signalen mit unterschiedlichen Klasseninformationen

### Wege zur Ausführung der Erfindung

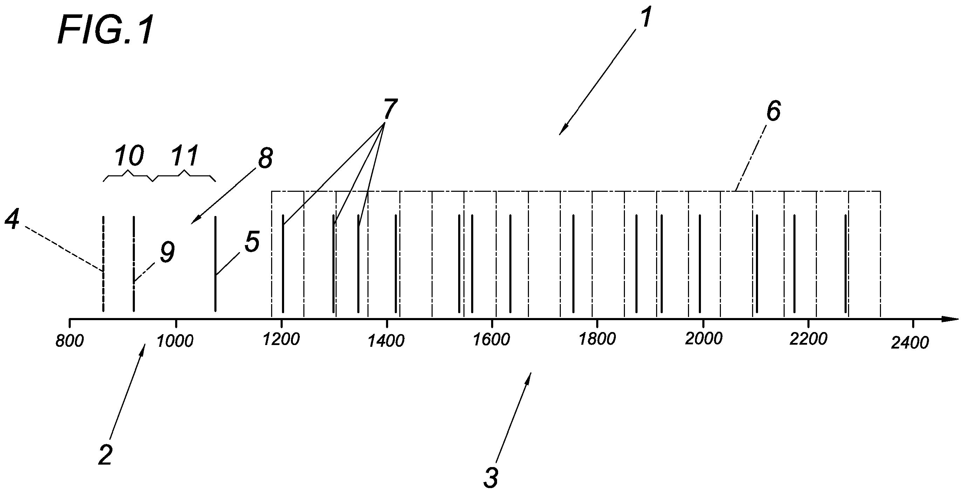

Fig. 1 zeigt den Zeitverlauf eines von einem Identifikationselement ausgesandten und von einer Ausleseeinheit empfangenen Signals 1, welches eine Zeitbasissequenz 2 und eine Identifikationssequenz 3 enthält. Die Identifikationssequenz 3 kann identifikationselementspezifische Informationen, wie beispielsweise Bauteilnummern, beinhalten. In der gezeigten Ausführungsform wird die Zeitbasissequenz 2 von einem ersten Impuls 4 und einem zweiten Impuls 5 begrenzt. Aus der Lage der Impulse 4 und 5 kann ein Zeitraster 6 abgeleitet werden, welcher der Auswertung der Identifikationssequenz 3 durch die Ausleseeinheit zugrunde gelegt wird. Der Zeitraster 6 selbst legt eine Zeitbasis und damit ein Maß für die zeitliche Abfolge von Signalteilen 7 der Identifikationssequenz 3 fest. Durch Störgrößen (nicht gezeigt), wie beispielsweise Druck oder Temperatur, welche die elektrischen Eigenschaften der Identifikationselemente ändern können, kann die Zeitbasis bzw. der Zeitraster 6 verändert werden. Beispielhaft sei die Veränderung der Geometrie der Identifikationselemente durch Temperatureinflüsse oder Dehnungen und die damit verbundene Laufzeitänderung der Signalteile 7 genannt. Durch Verwendung des Zeitrasters 6 bei der Auswertung der Identifikationselemente kann der Einfluss von vorab unbekannter Störgrößen kompensiert werden.

Die Zeitbasissequenz 2 enthält zusätzlich eine von einer Zeitbasis unabhängige Klasseninformation 8. Diese kann unter anderem dazu dienen, vorab bekannte Störgrößen, wie Produktionsfehler, bei der Auswertung der Identifikationssequenz 3 zu berücksichtigen. Beispielsweise können Identifikationselemente mit Hilfe der Klasseninformation 8 nach ihren Produktionsfehlern sortiert werden. Beim Auswerten eines Identifikationselementes durch die Ausleseeinheit kann nach Bestimmung des Zeitrasters 6 die Klasseninformation 8 des Identifikationselementes ausgewertet werden und das Zeitraster 6 mit der Kenntnis über die Produktionsfehler angepasst werden. Das dargestellte Signal 1 stellt eine besonders günstige Ausführungsform zur Übermittlung der Klasseninformation 8 dar, welche mit Hilfe eines zwischen den zwei die Zeitbasis festlegenden Impulsen 4,5 liegenden dritten Impuls 9 übertragen wird. Dabei wird die Klasseninformation 8 durch das dimensionslose und damit zeitunabhängige Verhältnis zwischen der Zeitdifferenz 10,11 zwischen dem ersten Impuls 4 und dem dritten Impuls 9 sowie dem dritten Impuls 9 und dem zweiten Impuls 5 gebildet. Bei einer im Wesentlichen homogenen Veränderung des Signals, beispielsweise durch Dehnung oder Stauchung der Signallänge, bleiben die Verhältnisse der Zeitdifferenzen 10, 11 annähernd konstant. Vorteilhafterweise wird dadurch die Klasseninformation 8 nicht durch die Störgröße beeinflusst und kann daher zuverlässig bestimmt werden.

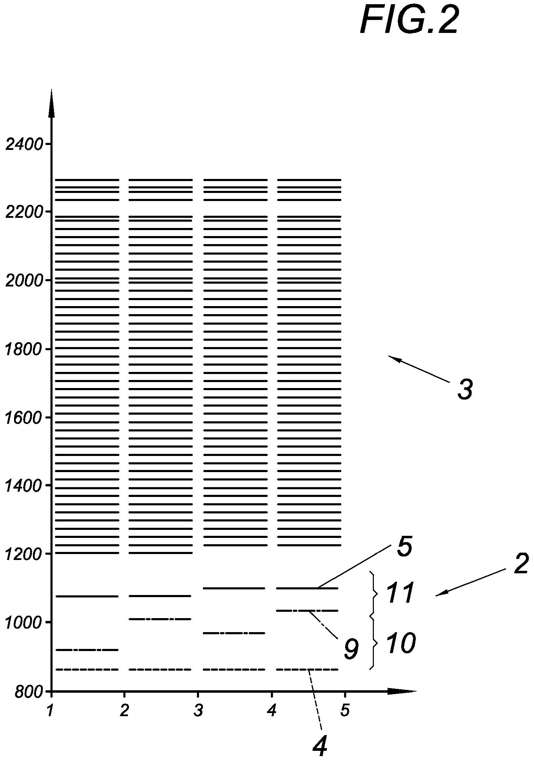

Fig. 2 zeigt die Zeitverläufe von unterschiedlichen Identifikationselementen in einem gemeinsamen Diagramm, wobei entlang der Ordinate eine Zeitskala aufgetragen ist. Die Identifikationselemente sind auf Basis ihrer Klasseninformation 8 in acht unterschiedliche Klassen eingeteilt. Es ist erkennbar, dass die Zeitbasissequenzen 2 der Identifikationselemente eindeutig voneinander unterscheidbar sind.

Mit Hilfe des durch die Klasseninformation 8 angepassten Zeitrasters 6 kann in weiterer Folge die Identifikationssequenz 3 ausgewertet werden. Dadurch, dass zufolge obiger Ausführungen die Identifikationssequenz 3 auch bei stärkeren Störungen ausgelesen werden kann, sofern wenigstens ein Teil dieser Störungen vorab bekannt ist, wird es möglich, dass die Identifikationselemente Sensoren für eine Messgröße bilden. Die Messgröße wird dabei von der Ausleseeinheit beispielsweise aus der Abweichung der Identifikationssequenz eines Identifikationselementes zu einer dem Identifikationselement zugeordneten Referenzidentifikationssequenz bestimmt. Dadurch ist es möglich, dass die Messgröße eine vorab nicht bekannte Störgröße ist, wie beispielsweise die Temperatur oder mechanische Verformung des Identifikationselementes. Die Messgröße selbst kann dabei entweder direkt proportional zu der ermittelten Abweichung sein oder mit dieser über eine vorab zu bestimmende Kennlinie zusammenhängen und, sofern dieser Zusammenhang in der Ausleseeinheit hinterlegt ist, direkt ermittelt werden

## Patentansprüche

1. Verfahren zum drahtlosen Auslesen unterschiedlicher Identifikationselemente, wobei eine Ausleseeinheit ein eine Basissequenz (2) und eine Identifikationssequenz (3) enthaltendes Signal (1) von einem Identifikationselement empfängt und aus der Basissequenz (2) ein Raster (6) zur Auswertung der Identifikationssequenz (3) erzeugt wird, **dadurch gekennzeichnet, dass** die Basissequenz (2) eine von der Basis unabhängige Klasseninformation beinhaltet, auf Grund derer das Raster (6) zur Auswertung der Identifikationssequenz (3) angepasst wird.

2. Verfahren nach Anspruch 1, **dadurch gekennzeichnet, dass** die zufolge einer Störgröße auftretende Abweichung der Basissequenz (2) von einer der Klasseninformation zugeordneten Referenzbasissequenz bestimmt und das Raster (6) zur Auswertung der Identifikationssequenz (3) entsprechend dieser Abweichung angepasst wird.

3. Verfahren nach Anspruch 1 oder 2, **dadurch gekennzeichnet, dass** die Identifikationselemente Sensoren für eine Messgröße bilden und die Messgröße von der Ausleseeinheit aus der Abweichung der Identifikationssequenz (3) eines Identifikationselementes zu einer, dem Identifikationselement zugeordneten Referenzidentifikationssequenz und/oder aus der Abweichung der Basissequenz (2) eines Identifikationselementes zu einer, dem Identifikationselement zugeordneten Referenzbasissequenz bestimmt wird.

## Claims

1. Method for the wireless reading-out of different identification elements, wherein a read-out unit receives a signal (1), which includes a base sequence (2) and an identification sequence (3), from an identification element and a raster (6) for evaluating the identification sequence (3) is generated from the base sequence (2), **characterised in that** the base sequence (2) contains class information which is independent of the base and on the basis of which the raster (6) for evaluating the identification sequence (3) is adapted.

2. Method as claimed in claim 1, **characterised in that** the deviation of the base sequence (2), which occurs as a result of a disturbance variable, from a reference base sequence allocated to the class information is determined and the raster (6) for evaluating the identification sequence (3) is adapted according to this deviation.

3. Method as claimed in claim 1 or 2, **characterised in that** the identification elements form sensors for a measured variable and the measured variable is determined by the read-out unit from the deviation of the identification sequence (3) of an identification element with respect to a reference identification sequence allocated to the identification element and/or from the deviation of the base sequence (2) of an identification element with respect to a reference base sequence allocated to the identification element.

## Revendications

1. Procédé pour la lecture sans fils de différents éléments d'identification, selon lequel une unité de lecture reçoit d'un élément d'identification un signal (1) contenant une séquence de base (2) et une séquence d'identification (3) et une grille (6) d'évaluation de la séquence d'identification (3) est générée à partir de la séquence de base (2), **caractérisé en ce que** la séquence de base (2) contient une information de classe indépendante de la base, sur la base de laquelle la grille (6) d'évaluation de la séquence d'identification (3) est adaptée.

2. Procédé selon la revendication 1, **caractérisé en ce que** l'écart de la séquence de base (2) provoqué par une grandeur perturbatrice est déterminé par une séquence de base de référence associée à l'information de classe et la grille (6) d'évaluation de la séquence d'identification (3) est adaptée en fonction de cet écart.

3. Procédé selon la revendication 1 ou 2, **caractérisé en ce que** les éléments d'identification constituent des détecteurs pour une grandeur de mesure et la grandeur de mesure est déterminée par l'unité de lecture à partir de l'écart de la séquence d'identification (3) d'un élément d'identification par rapport à une séquence d'identification de référence associée à l'élément d'identification et/ou à partir de l'écart de la séquence de base (2) d'un élément d'identification par rapport à une séquence de base de référence associée à l'élément d'identification.
